# EUROPÄISCHE PATENTSCHRIFT

(11) **EP 3 599 049 B1**
(45) Veröffentlichungstag und Bekanntmachung des Hinweises auf die Patenterteilung: **25.08.2021**
(21) Anmeldenummer: 19184844.9
(22) Anmeldetag: 08.07.2019
(51) Int. Cl.: B23Q 11/08

(54) **FALTENBALGABDECKUNG FÜR EINE WERKZEUGMASCHINE**
FOLDING BELLOWS COVER FOR A MACHINE TOOL
COUVERCLE DE SOUFFLETS EN ACCORDÉON POUR UNE MACHINE-OUTIL

(30) Priorität: 24.07.2018 DE 102018212324
(43) Veröffentlichungstag der Anmeldung: 29.01.2020
(73) Patentinhaber: Hennig Holding GmbH, 85551 Kirchheim (DE)
(72) Erfinder: Schoenerwald, Kurt, 84186 Vilsheim (DE)
(74) Vertreter: Rau, Schneck & Hübner Patentanwälte Rechtsanwälte PartGmbB

(56) Entgegenhaltungen:
- EP-A1- 2 851 604
- DE-A1- 3 936 212
- DE-U1-202017 101 174
- IT-A1- BO20 090 711
- IT-A1- CR20 110 011

## Beschreibung

Die vorliegende Patentanmeldung nimmt die Priorität der deutschen Patentanmeldung DE 10 2018 212 324.1 in Anspruch.

Die Erfindung betrifft eine Faltenbalgabdeckung für eine Werkzeugmaschine sowie ein Abdecksystem mit einer derartigen Faltenbalgabdeckung.

Aus der DE 10 2012 101 307 A1 ist eine Abdeckung für eine Werkzeugmaschine bekannt, welche eine Vielzahl verschiebbar gelagerter Abstützrahmen mit daran angebrachten Lamellenblechen aufweist. Die Abdeckung kann einen Faltenbalg aufweisen. Die Abstützrahmen sind plattenförmig ausgebildet und mit den Lamellenblechen vernietet. Die Montage der Lamellen und der Faltenbälge mit den Abstützrahmen ist aufwändig und kostenintensiv.

Aus der IT BO20 090 711 A1 und der IT CR20 110 011 A1 sind Faltenbalgabdeckungen für Werkzeugmaschinen bekannt.

Aus der EP 2 851 604 A1 ist eine Schutzabdeckung bekannt, die Stützrahmen und dazwischen angeordnete Faltenbalgabschnitte aufweist. An den Stützrahmen sind Teleskopbleche angeordnet.

Aus der DE 20 2017 101 174 U1 und der DE 39 26 212 A1 sind Teleskopabdeckungen bekannt.

Der Erfindung liegt die Aufgabe zugrunde, eine robuste und kompakt dimensionierbare Faltenbalgabdeckung für eine Werkzeugmaschine zu schaffen, welche einfach zu montieren und in besonders wirtschaftlicher Weise herstellbar ist.

Diese Aufgabe wird durch eine Faltenbalgabdeckung mit den Merkmalen des Anspruchs 1 gelöst. Es wurde erkannt, dass die Profilstange mindestens ein sich entlang ihrer Längsrichtung erstreckendes Eingriffsprofil umfassen muss, um eine effiziente Montage und eine wirtschaftliche Herstellung der Faltenbalgabdeckung zu gewährleisten. Unter der Profilstange wird ein Bauteil verstanden, dass entlang der Längsrichtung eine konstante Querschnittsfläche aufweist. Die Profilstange kann sich insbesondere entlang einer geraden oder einer gekrümmten Profillinie erstrecken. Die Längsrichtung ist stets tangential zu der Profillinie orientiert. Die Profilstange kann beispielsweise ein Extrusionsprofil, also ein in einem Extrusionsverfahren, insbesondere in einem Strangpressverfahren, hergestelltes Profil-Bauteil sein. Entlang der Längsrichtung kann die Profilstange Hinterschneidungen, beispielsweise in Form von sich quer zu der Längsrichtung erstreckenden Bohrungen, aufweisen. Vorzugsweise ist das Eingriffsprofil derart ausgebildet, dass die Profilstange Hinterschneidungen senkrecht zu der Längsrichtung aufweist. Dadurch, dass die Profilstange das mindestens eine Eingriffsprofil umfasst, sind die mehreren Faltenbalgglieder besonders einfach miteinander verbindbar. Insbesondere sind die mehreren Faltenbalgglieder formschlüssig miteinander verbindbar. Die mehreren Faltenbalgglieder können mittels des Eingriffsprofils ohne weitere Verbindungsmittel miteinander verbindbar sein. Die mit dem mindestens einen Eingriffsprofil ausgebildete Profilstange ist, beispielsweise in dem Extrusionsverfahren, kostengünstig herstellbar und gewährleistet eine zeit- und kosteneffiziente Montage der Faltenbalgabdeckung. Durch die Reduktion, insbesondere Vermeidung, zusätzlich notwendiger Verbindungsmittel, wird neben den Herstellungskosten auch das Gewicht der Faltenbalgabdeckung reduziert. Die Profilstange ermöglicht insbesondere einen einfachen modularen Aufbau der Faltenbalgabdeckung.

Dadurch, dass an der Profilstange und an dem Faltvorhang Lamellenelemente angebracht sind, ist die Faltenbalgabdeckung mechanisch besonders robust und gewährleistet die Abdeckung der Werkzeugmaschine auch unter rauen Einsatzbedingungen zuverlässig. An jeder der Profilstangen ist ein Lamellenelement angebracht. Gemäß einem Aspekt der Erfindung ist ein Lamellenelement an jedem der Faltvorhänge angebracht. An dem jeweiligen Faltvorhang können mindestens zwei, insbesondere mindestens drei, insbesondere mindestens vier, Lamellenelemente angebracht sein. Der Faltvorhang weist eine Aufdickung, insbesondere einen mehrlagigen Bereich, auf. Diese Aufdickung kann beispielsweise durch eine Vernähung und/oder eine Verklebung ausgebildet sein. Gemäß einem Aspekt der Erfindung ist das Lamellenelement an der Aufdickung des Faltvorhangs angebracht. Das jeweilige Lamellenblech kann somit, insbesondere entlang der Auszugsrichtung, besonders kompakt, insbesondere schmal, dimensioniert werden. Die Faltenbalgabdeckung ist somit entlang der Auszugsrichtung, insbesondere in der Einrückstellung, besonders kompakt anordenbar.

Das mindestens eine an der Profilstange und/oder an dem Faltvorhang angeordnete Lamellenblech erstreckt sich vorzugsweise über mindestens zwei, insbesondere über sämtliche, der geneigt zueinander angeordneten Wandabschnitte. Gemäß einem Aspekt der Erfindung ist das sich über mindestens zwei der Wandabschnitte erstreckende Lamellenblech einstückig ausgebildet. Das mindestens eine Lamellenblech kann in einem Umformprozess, insbesondere in einem Abkantprozess, aus einer einzigen Blechtafel hergestellt sein. Alternativ kann das mindestens eine Lamellenblech auch gefügt sein. Das mindestens eine Lamellenblech kann auch mehrteilig ausgebildet sein.

Das jeweilige Lamellenelement ist insbesondere als Lamellenblech ausgebildet. Die Lamellenbleche der Faltenbalgglieder können einen metallischen Werkstoff, insbesondere Aluminium oder Stahl, oder einen Kunststoff aufweisen. Vorzugsweise ist das mindestens eine Lamellenblech aus demselben Material wie die Profilstange und/oder die Anschlussprofilstange. Das Lamellenblech ist somit besonders einfach, insbesondere durch Verschweißen, mit der Profilstange verbindbar. Alternativ kann das Lamellenblech mit der Profilstange und/oder der Anschlussprofilstange mittels einer Klebverbindung und/oder einer Bolzenverbindung, insbesondere einer Schraubverbindung und/oder einer Nietverbindung, verbunden sein. Gemäß einem Aspekt der Erfindung ist die Verbindung zwischen dem jeweiligen Lamellenblech und der Profilstange derart ausgebildet, dass keines der Verbindungsmittel einer Oberfläche des jeweiligen Lamellenblechs übersteht. Hierzu können die Lamellenbleche mindestens eine Senkung aufweisen.

Die Lamellenbleche sind vorzugsweise derart ausgebildet, dass diese sowohl in der Einrückstellung als auch in der Ausrückstellung der Faltenbalgabdeckung einander überlappen. Die Faltenbalgabdeckung kann ein Abstandsbegrenzungselement zum Begrenzen eines maximalen Abstands zweier benachbarter Profilstangen aufweisen. Das Abstandsbegrenzungselement ist beispielsweise der jeweilige Faltvorhang. Hierdurch kann sichergestellt werden, dass die Lamellenbleche in jeder Stellung der Faltenbalgabdeckung einander zuverlässig überlappen. Die Schutzwirkung der Faltenbalgabdeckung kann somit zuverlässig gewährleistet werden.

Gemäß einem Aspekt der Erfindung umfasst die Faltenbalgabdeckung mindestens zwei, insbesondere mindestens drei, insbesondere mindestens fünf, insbesondere mindestens zehn, insbesondere mindestens fünfzehn Faltenbalgglieder. Vorzugsweise sind beliebig viele Faltenbalgglieder, insbesondere in Reihe, miteinander verbindbar. Sämtliche der mehreren Faltenbalgglieder sind vorzugsweise identisch ausgebildet. Hierdurch ist die Faltenbalgabdeckung besonders flexibel für unterschiedliche Einsatzbereiche herstellbar und/oder anpassbar.

Gemäß einem Aspekt der Erfindung ist die Faltenbalgabdeckung, insbesondere entlang einer Auszugsrichtung, zwischen der Ausrückstellung und der Einrückstellung verlagerbar. Die Faltenbalgabdeckung überspannt in der Ausrückstellung eine größere Abdeckfläche als in der Einrückstellung. Beispielsweise ist die Werkzeugmaschine in der Ausrückstellung von der Faltenbalgabdeckung verdeckt, wobei die Werkzeugmaschine gegenüber einem Außenraum abgeschirmt ist. In der Einrückstellung ist die Werkzeugmaschine vorzugsweise nicht vollständig gegenüber dem Außenraum abgeschirmt, wodurch die Werkzeugmaschine frei zugänglich ist. Alternativ kann die Faltenbalgabdeckung als Abdeckung zwischen relativ zueinander beweglichen Komponenten der Werkzeugmaschine ausgebildet sein.

Gemäß einem Aspekt der Erfindung ist die Faltenbalgabdeckung flexibel, insbesondere biegeflexibel und/oder längsflexibel, ausgebildet. Die Faltenbalgabdeckung kann entlang einer geraden und/oder einer gekrümmten Auszugsrichtung längenveränderlich sein. Vorzugsweise ist der Faltvorhang flexibel, insbesondere biegeflexibel und/oder längsflexibel, ausgebildet. Der Faltvorhang kann ein textiles Material und/oder ein gummielastisches Material, insbesondere einen gummielastischen Kunststoff umfassen. Vorzugsweise umfasst der Faltvorhang ein Gewebematerial, insbesondere ein beschichtetes Gewebematerial. Beispielsweise kann eine Beschichtung des Faltvorhangs, Polyvinylchlorid und/oder Polyurethan aufweisen. Der Faltvorhang ist vorzugsweise einstückig, insbesondere fügenahtfrei, ausgebildet. Der Faltvorhang ist beispielsweise als fügenahtfreier Gummibalg ausgebildet.

Der Faltvorhang kann mehrere miteinander verbundene Faltelemente umfassen. Die Faltelemente können beispielsweise stoffschlüssig, insbesondere durch Verkleben oder Verschweißen, miteinander verbunden sein. Die Faltelemente können auch miteinander vernäht sein. Vorteilhaft wird hierdurch erreicht, dass der jeweilige Faltvorhang, insbesondere entlang einer Auszugsrichtung, eine veränderbare Länge aufweist. Der Faltvorhang kann auch einstückig ausgebildet sein.

Gemäß einem weiteren Aspekt der Erfindung umfasst der Faltvorhang mehrere starre, insbesondere plattenförmige, gelenkig miteinander verbundene Faltelemente. Durch die gelenkige Verbindung der starren Faltelemente kann die Flexibilität des Faltvorhangs auf alternative Weise gewährleistet werden. Ein derart ausgebildeter Faltvorhang ist mechanisch besonders robust.

Eine Faltenbalgabdeckung nach Anspruch 2 ist besonders einfach und schnell montierbar und ermöglicht eine effektive, insbesondere staubdichte, Abschirmung der Werkzeugmaschine gegenüber dem Außenraum. Vorzugsweise weist der Faltvorhang mindestens einen Vorhangkeder zum Verbinden mit der Kedernut der Profilstange auf. Eine als Kederverbindung ausgebildete Verbindung zwischen der Profilstange und dem Faltvorhang ist wirtschaftlich montierbar und dicht, insbesondere staubdicht, ausführbar.

Vorzugsweise umfasst jede der Profilstangen mindestens zwei als Kedernuten ausgebildete Eingriffsprofile. Vorzugsweise sind die beiden Kedernuten, insbesondere hinsichtlich einer senkrecht zur der Auszugsrichtung orientierten Ebene, symmetrisch an der jeweiligen Profilstange angeordnet. Die mindestens eine Kedernut kann sich parallel zu der Längsrichtung erstrecken. Vorzugsweise weist jeder der Faltvorhänge entsprechend zwei an einander gegenüberliegenden Kanten angeordnete Vorhangkeder zum Verbinden mit den Kedernuten zweier zueinander benachbarter Profilstangen auf.

Eine Faltenbalgabdeckung gemäß Anspruch 3 ist besonders leicht, stabil und flexibel einsetzbar. Durch die Ausbildung der jeweiligen Profilstange als Hohlprofil weist diese eine besonders hohe gewichtsbezogene Biegesteifigkeit auf. Ein Hohlraum innerhalb der jeweiligen Profilstange kann zur formschlüssigen Verbindung mit weiteren Komponenten der Faltenbalgabdeckung ausgebildet sein. Gemäß einem Aspekt der Erfindung weisen zumindest einzelne der Profilstangen Verschließmittel zum, insbesondere staubdichten, Verschließen des Hohlraums auf.

Eine Faltenbalgabdeckung gemäß Anspruch 4 ist besonders einfach und mit reduziertem Materialeinsatz montierbar. Vorzugsweise weist jedes der mehreren Faltenbalgglieder an einem oder an beiden Enden der Profilstange das Anschlussmittel auf. Gemäß einem Aspekt der Erfindung weist höchstens jedes zweite, insbesondere höchstens jedes dritte Faltenbalgglied das Anschlussmittel zum verlagerbaren Befestigen der Faltenbalgabdeckung auf. Das Anschlussmittel kann ein Gleitlager und/oder ein Rollenlager zum verlagerbaren Befestigen der Faltenbalgabdeckung aufweisen. Vorzugsweise umfasst das an einer Oberseite der Profilstange angebrachte Anschlussmittel ein Rollenlager. Ein derartiges Anschlussmittel wird als Kopfrollenanker bezeichnet. Der Kopfrollenanker kann Führungsbacken zum Führen des Rollenlagers entlang einer Lagerschiene aufweisen.

Gemäß einem Aspekt der Erfindung ist das Anschlussmittel in einem unteren Bereich der Profilstange angebracht und als Führungselement ausgebildet. Ein derartiges Anschlussmittel wird als Fußschieneneingriff bezeichnet. Der Fußschieneneingriff ist vorzugsweise zum horizontalen Führen der Faltenbalgabdeckung entlang einer Führungsschiene ausgebildet.

Gemäß einem Aspekt der Erfindung kann das Anschlussmittel zum formschlüssigen Verbinden mit der Profilstange in den Hohlraum der Profilstange eingebracht werden. Hierzu kann das Anschlussmittel einen Einschubfortsatz aufweisen, welcher sich in einem montierten Zustand in den Hohlraum erstreckt. Vorzugsweise ist das Anschlussmittel über quer zu der Längsrichtung orientierte Verbindungsmittel, insbesondere Niete und/oder Schrauben, entlang der Längsrichtung an der Profilstange angebracht.

Hierzu können die Profilstange und der Einschubfortsatz mindestens eine Querbohrung aufweisen.

Eine Faltenbalgabdeckung gemäß Anspruch 5 ist besonders einfach montierbar und im Betrieb robust. Das Längsloch erstreckt sich parallel zu der Längsrichtung. Das Längsloch kann einen vieleckförmigen oder runden, insbesondere kreisförmigen, Querschnitt aufweisen. Gemäß einem Aspekt der Erfindung ist das Längsloch in Längsrichtung geschlitzt. Das Anschlussmittel ist an der Profilstange vorzugsweise mittels einer Nietverbindung und/oder einer Schraubverbindung angebracht. Die in Längsrichtung geschlitzte Ausbildung des Längslochs ermöglicht das Einschrauben von Schraubelementen, insbesondere von Blechschrauben, ohne vorheriges Gewindeschneiden. Der Montageprozess ist somit besonders einfach und wirtschaftlich.

Eine Faltenbalgabdeckung gemäß Anspruch 6 ist im Betrieb besonders robust und in der Einrückstellung besonders kompakt anordenbar. Die Aufdickung erstreckt sich vorzugsweise ausschließlich in Richtung des Hohlraums. Eine Außenwand der Profilstange kann somit weitestgehend eben ausgebildet sein. Die Profilstangen der mehreren Faltenbalgglieder sind somit in der Einrückstellung besonders kompakt zueinander anordenbar. Eine Abnutzung, insbesondere eine Beschädigung, des flexiblen Faltvorhangs durch, insbesondere scharfkantige, Überstände der Profilstangen wird zuverlässig vermieden. Die Aufdickung gewährleistet eine hohe Festigkeit und Stabilität der Profilstangen auch im Bereich der durch die Querbohrungen verursachten Aussparungen.

Eine Faltenbalgabdeckung gemäß Anspruch 7 ist in der Einrückstellung besonders kompakt anordenbar und gewährleistet zuverlässig den Schutz des flexiblen Faltvorhangs vor Abnutzung und Beschädigung. Die Senkung kann als kegelförmige oder zylindrische Senkung ausgebildet sein. Vorzugsweise entspricht die Geometrie der Senkung der Geometrie eines Kopfes eines durch die Querbohrung in die Profilstange eingebrachten Verbindungsmittels. Das in die Querbohrung eingebrachte Verbindungsmittel kann als Schraubelement, insbesondere als Senkkopfschraube oder als Zylinderkopfschraube, oder als Niet, insbesondere als Senkniet, ausgebildet sein. Vorzugsweise ist die Senkung derart ausgebildet, dass ein Kopf des Verbindungsmittels im montierten Zustand an der Profilstange nicht übersteht, insbesondere flächenbündig zu einer Oberfläche der Profilstange angeordnet ist.

Eine Faltenbalgabdeckung gemäß Anspruch 8 ist besonders flexibel für unterschiedliche Einsatzbedingungen anwendbar. Die Anschlussprofilstange kann zu der Profilstange in einem Winkel von 30° bis 180°, insbesondere von 45° bis 135°, insbesondere von 80° bis 110°, angebracht sein. Vorzugsweise ist die Anschlussprofilstange senkrecht zu der Profilstange orientiert mit dieser verbunden.

Vorzugsweise ist die Anschlussprofilstange mit der Profilstange über einen Winkelverbinder verbunden. Der Winkelverbinder kann über je einen Schenkel mit der Anschlussprofilstange und mit der Profilstange verbunden sein. Gemäß einem Aspekt der Erfindung ist je ein Schenkel des Winkelverbinders in einen Hohlraum der Anschlussprofilstange und der Profilstange eingeführt. Hierdurch wird eine formschlüssige Verbindung des Winkelverbinders mit der Anschlussprofilstange und der Profilstange gewährleistet. Der jeweilige Schenkel des Winkelverbinders kann in der Anschlussprofilstange und in der Profilstange durch quer zu der Längsrichtung orientierte Bolzen, insbesondere Niete und/oder Schrauben, befestigt sein. Die Verbindung zwischen der Anschlussprofilstange und der Profilstange kann als Stoßverbindung ausgebildet sein.

Gemäß einem weiteren Aspekt der Erfindung erstreckt sich der Faltvorhang auch zwischen den zueinander benachbarten Anschlussprofilstangen. Vorzugsweise erstreckt sich der Faltvorhang des Faltenbalgglieds einstückig zwischen einem Profilstangenverbund des Faltenbalglieds, umfassend die Profilstange und die Anschlussprofilstange, und dem dazu benachbarten Profilstangenverbund. Der Faltvorhang weist im Bereich der Verbindung zwischen der Profilstange und der Anschlussprofilstange vorzugsweise eine Knickfaltung auf.

Gemäß einem Aspekt der Erfindung kann an dem der Profilstange abgewandten Ende der jeweiligen Anschlussprofilstange eine weitere Anschlussprofilstange angebracht sein. Die Faltenbalgabdeckung kann somit mindestens zwei, insbesondere drei, zueinander geneigt orientierte Wandabschnitte umfassen. Vorzugsweise umfasst die Faltenbalgabdeckung einen vertikal orientierten Wandabschnitt mit vertikal orientierten Profilstangen und einem horizontal orientierten Wandabschnitt mit horizontal orientierten und mit den Profilstangen verbundenen Anschlussprofilstangen. Der horizontal orientierte Wandabschnitt wird im Folgenden auch als Dachabschnitt bezeichnet. Die mehreren Faltenbalgglieder können jeweils an einem Ende der Anschlussprofilstange das Anschlussmittel zum verlagerbaren Befestigen der Faltenbalgabdeckung aufweisen.

Eine Faltenbalgabdeckung gemäß Anspruch 9 ist durch die einheitliche Ausbildung der Anschlussprofilstange und der Profilstange bzw. das einheitliche Querschnittsprofil besonders wirtschaftlich herstellbar.

Eine Faltenbalgabdeckung gemäß Anspruch 10 ist gegenüber Verschmutzung unempfindlich und einfach reinigbar. Eine derartige Faltenbalgabdeckung ist besonders zur Abdeckung von Werkzeugmaschinen zur spanenden, insbesondere schleifenden, Werkstückbearbeitung geeignet.

Eine Faltenbalgabdeckung gemäß Anspruch 11 ist besonders kompakt anordenbar und im Betrieb robust. Die zurückspringende Anschlussfläche ist vorzugsweise um ein Maß gegenüber einer angrenzenden, vorstehenden Fläche der Profilstange zurückversetzt, das einer Wandstärke des Lamellenelements bzw. Lamellenblechs entspricht. Das Lamellenblech kann somit flächenbündig zu der an die Anschlussfläche angrenzenden Fläche der Profilstange angeordnet sein. Dadurch, dass ein Überstand des Lamellenblechs über die Profilstange verhindert wird, ist die Faltenbalgabdeckung in der Einrückstellung besonders kompakt stapelbar. Überstehende Kanten der Lamellenbleche, welche zu erhöhtem Abrieb an dem Faltvorhang führen könnten, werden vermieden.

Der Erfindung liegt ferner die Aufgabe zugrunde, ein Abdecksystem zu schaffen, das besonders flexibel für unterschiedliche Einsatzbedingungen anpassbar ist und in wirtschaftlicher Weise hergestellt werden kann.

Diese Aufgabe wird durch ein Abdecksystem mit den Merkmalen des Anspruchs 12 gelöst. Die Vorteile des erfindungsgemäßen Abdecksystems entsprechen den Vorteilen der bereits beschriebenen Faltenbalgabdeckung. Vorzugsweise umfasst die Schieneneinrichtung des Abdecksystems ein Kopfschienenprofil und ein Fußschienenprofil. Die Faltenbalgabdeckung kann über die Kopfrollenanker der Faltenbalgglieder verschiebbar an dem Kopfschienenprofil gelagert sein. Über die Kopfrollenanker werden vorzugsweise die in vertikaler Richtung wirkenden Gewichtskräfte auf die Schieneneinrichtung übertragen. Der Fußschieneneingriff des jeweiligen Faltenbalgglieds kann zur Führung eines unteren Bereichs der Faltenbalgabdeckung, insbesondere ausschließlich in horizontaler Richtung, das Fußschienenprofil umgreifen. Ein Ausschwenken der Faltenbalgabdeckung in horizontaler Richtung kann somit zuverlässig verhindert werden. Das Kopfschienenprofil ist dabei vorzugsweise als Tragschiene ausgebildet. Das Fußschienenprofil ist vorzugsweise als Führungsschiene ausgebildet.

Vorzugsweise umfasst die Schieneneinrichtung eine Antriebseinheit zum automatisierten Verlagern der Faltenbalgabdeckung zwischen der Einrückstellung und der Ausrückstellung. Die Antriebseinheit kann hierzu einen Antriebsmotor aufweisen und beispielsweise über eine Antriebskette mit der Faltenbalgabdeckung in Verbindung stehen.

Die Schieneneinrichtung kann auch eine Verschlusseinrichtung zum Sperren der Verlagerbarkeit der Faltenbalgabdeckung in der Ausrückstellung und/oder der Einrückstellung aufweisen. Die Verschlusseinrichtung kann manuell oder automatisiert betätigbar sein. Die Verschlusseinrichtung gewährleistet, dass ein ungewolltes Verlagern, insbesondere Öffnen, der Faltenbalgabdeckung, insbesondere während des Betriebs der Werkzeugmaschine, zuverlässig verhindert werden kann.

Weitere Merkmale, Vorteile und Einzelheiten der Erfindung ergeben sich aus der nachfolgenden Beschreibung mehrerer Ausführungsbeispiele. Es zeigen:
- Fig. 1: eine perspektivische Darstellung eines nicht erfindungsgemäßen Abdecksystems mit einer Schieneneinrichtung und einer verschiebbar daran angebrachten Faltenbalgabdeckung, wobei die Faltenbalgabdeckung in einer Ausrückstellung angeordnet ist,
- Fig. 2: eine perspektivische Darstellung des Abdecksystems in Fig. 1, wobei die Faltenbalgabdeckung in einer Einrückstellung angeordnet ist,
- Fig. 3: eine perspektivische Detaildarstellung der Faltenbalgabdeckung in Fig. 1, wobei eine Profilstange und zwei mittels jeweils einer Kederverbindung daran angebrachte Faltenvorhänge dargestellt sind,
- Fig. 4: eine perspektivische Darstellung eines nicht erfindungsgemäßen Abdecksystems, wonach die Faltenbalgabdeckung je eine senkrecht zu einer Profilstange an dieser angebrachte Anschlussprofilstange aufweist, wobei die Faltenbalgabdeckung einen Wandabschnitt und einen Dachabschnitt umfasst,
- Fig. 5: eine perspektivische Detaildarstellung der Faltenbalgabdeckung in Fig. 4, mit einem an Profilstange angebrachten Winkelverbinder zum Verbinden der Profilstange mit der Anschlussprofilstange,
- Fig. 6: eine Schnittdarstellung entlang der Schnittlinie VI-VI in Fig. 5, eine Bolzenverbindung zum formschlüssigen Befestigen des Winkelverbinders an der Profilstange,
- Fig. 7: eine perspektivische Darstellung eines nicht erfindungsgemäßen Abdecksystems mit einer Faltenbalgabdeckung und einer Schieneneinrichtung, wobei die Faltenbalgabdeckung einen Dachabschnitt und zwei seitlich daran angeordnete Wandabschnitte zum Ausbilden eines Abdecktunnels aufweist,
- Fig. 8: eine perspektivische Darstellung eines nicht erfindungsgemäßen Abdecksystems mit einer Faltenbalgabdeckung und einer Schieneneinrichtung, wobei die Faltenbalgabdeckung einen Wandabschnitt und einen Dachabschnitt aufweist und wobei die Profilstangen mit einander überlappenden Lamellenblechen verbunden sind,
- Fig. 9: eine perspektivische Schnittdarstellung entlang der Schnittlinie IX-IX in Fig. 8 mit mehreren Profilstangen, je einem zwischen den Profilstangen angebrachten Faltvorhang und je einem an den Profilstangen angebrachten Lamellenblech und
- Fig. 10: eine Schnittdarstellung einer erfindungsgemäßen Faltenbalgabdeckung in einer Draufsicht, umfassend mehrere miteinander verbundene Faltenbalgglieder mit jeweils einer Profilstange und einem an der Profilstange angebrachten Faltvorgang und mehrere an der jeweiligen Profilstange und an dem jeweiligen Faltvorhang angebrachte Lamellenelemente.

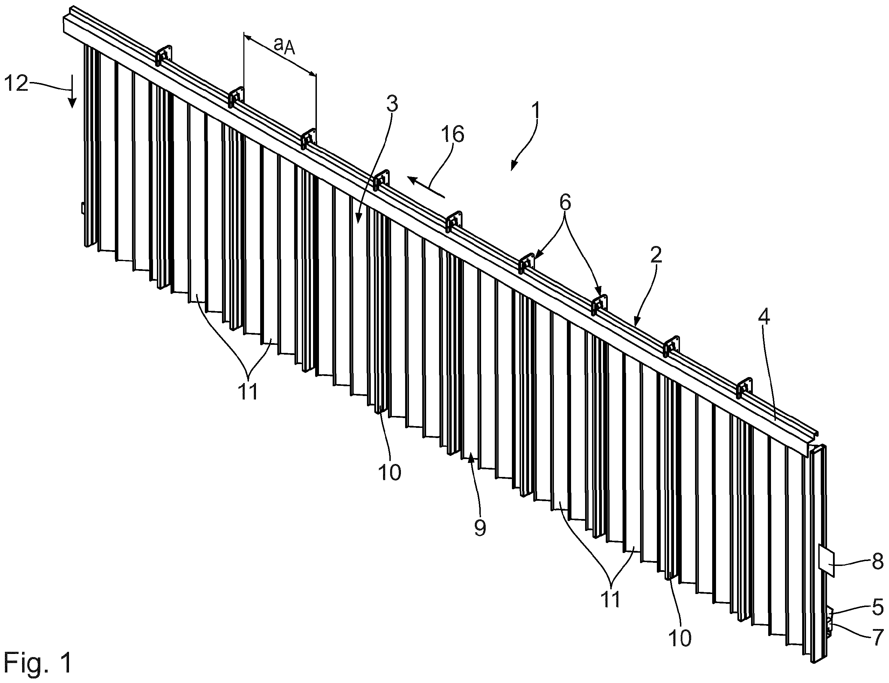

Anhand der Fig. 1 bis Fig. 3 ist ein nicht erfindungsgemäßes Ausführungsbeispiel des Abdecksystems 1 beschrieben. Das Abdecksystem 1 umfasst eine Schieneneinrichtung 2 und eine Faltenbalgabdeckung 3. Die Faltenbalgabdeckung 3 ist verschiebbar an der Schieneneinrichtung 2 gelagert. Die Faltenbalgabdeckung 3 ist als im Wesentlichen ebene Abdeckwand ausgebildet.

Die Schieneneinrichtung 2 umfasst ein Kopfschienenprofil 4 und ein Fußschienenprofil 5. Zum verschiebbaren Lagern der Faltenbalgabdeckung 3 an der Schieneneinrichtung 2 umfasst die Faltenbalgabdeckung 3 mehrere Kopfrollenanker 6, welche sich von oben auf dem Kopfschienenprofil 4 abstützen. Zudem umfasst die Faltenbalgabdeckung 3 mehrere Fußschieneneingriffe 7, welche zur horizontalen Lagerung, insbesondere senkrecht zu einer Abdeckfläche 8 der Faltenbalgabdeckung 3, ausgebildet sind.

Die Faltenbalgabdeckung 3 umfasst mehrere Faltenbalgglieder 8 mit jeweils einer Profilstange 10 und einem an der Profilstange 10 angebrachten Faltvorhang 11. Die Profilstangen 10 weisen jeweils eine parallel zu ihrer Haupterstreckungsrichtung orientierte Längsrichtung 12 auf. Die Längsrichtung 12 ist vertikal orientiert.

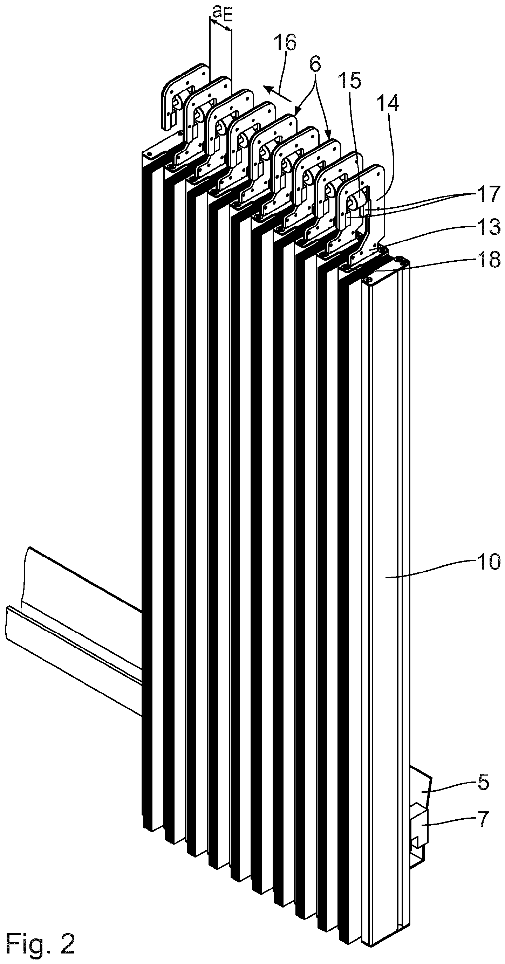

Je einer der Kopfrollenanker 6 ist an einem oberen Ende der Profilstange 10 angebracht. Je einer der Fußschieneneingriffe 7 ist in einem unteren Bereich an einer der Profilstangen 10 angebracht. Wie insbesondere in der Fig. 2 im Detail dargestellt ist, umfasst der Kopfrollenanker 6 einen Ankerflansch 13 zum Befestigen des Kopfrollenankers 6 an der jeweiligen Profilstange 10, einen mit dem Ankerflansch 13 verbundenen Ankerbügel 14 zum Hintergreifen des Kopfschienenprofils 4 und eine an dem Ankerbügel 14 drehbar gelagerte Ankerrolle 15 zum verschiebbaren Lagern der Faltenbalgabdeckung 3 entlang einer Auszugsrichtung 16. An dem Ankerbügel 14 sind Führungsbacken 17 zum beidseitigen Führen des Kopfrollenankers 6 an dem Kopfschienenprofil 4 angeordnet. Die Führungsbacken 17 sind an den Innenseiten der Schenkel des U-förmigen Ankerbügels 14 angebracht. Die Kopfrollenanker 6 sind jeweils über dem Ankerflansch 13 mittels Schraubelementen 18 an den Profilstangen 10 angebracht.

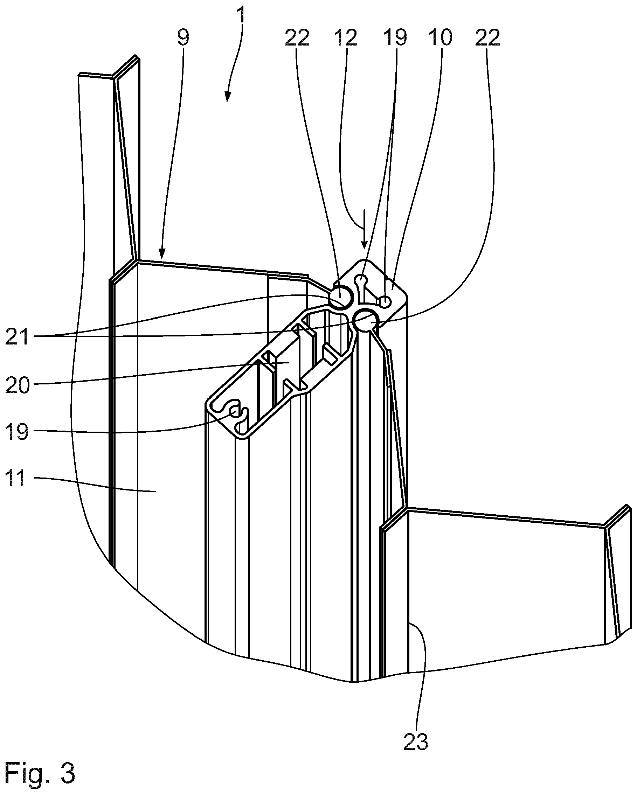

Wie insbesondere aus der Fig. 3 hervorgeht, weisen die Profilstangen 10 mehrere Eingriffsprofile 19, 20, 21 auf. Zum Eingriff der Schraubelemente 18 in die Profilstange 10 umfasst diese drei Längslöcher 19. Die Längslöcher 19 sind im Querschnitt kreisförmig ausgebildet und entlang der Längsrichtung 12 geschlitzt. Hierzu ist das jeweilige Kreisprofil einseitig geöffnet. Die Längslöcher 19 erstrecken sich entlang der Längsrichtung 12 über die gesamte Erstreckung der Profilstange 10.

Die Profilstange 10 ist als Hohlprofil ausgebildet. Ein von dem Stangenmaterial quer zu der Längsrichtung 12 umgebener Hohlraum 20 ist als weiteres Eingriffsprofil 19, 20, 21 ausgebildet. Zum formschlüssigen Verbinden des Kopfrollenankers 6 mit der Profilstange 10 ist der Ankerflansch 13 abschnittsweise in den Hohlraum 20 eingebracht.

Als weitere Eingriffsprofile 19, 20, 21 umfasst die Profilstange 10 zwei Kedernuten 21. Der Faltvorhang 11 ist mit der Profilstange 10 über eine Kederverbindung verbunden, wobei der Faltvorhang 11 mit je einer Profilstange 10 einen Vorhangkeder 22 aufweist, welcher in die Kedernut 21 der jeweiligen Profilstange 10 eingreift.

Die Profilstange 10 umfasst einen metallischen Werkstoff, insbesondere Aluminium. Die Profilstange 10 ist in einem Strangpressverfahren hergestellt.

Der Faltvorhang 11 umfasst ein flexibles Material, insbesondere ein textiles Material. Der Faltvorhang 11 umfasst ferner eine Beschichtung aus Kunststoff. Die Faltwand 11 umfasst vorzugsweise ein Gewebematerial mit einer Oberflächenbeschichtung aus Polyurethan oder Polyvinylchlorid.

Die Funktionsweise des Abdecksystems 1 bzw. der Faltenbalgabdeckung 3 für eine Werkzeugmaschine ist wie folgt: Zum Abdecken eines maschinenseitigen Raums gegenüber einem Außenraum ist das Abdecksystem 1 zwischen der nicht dargestellten Werkzeugmaschine und dem Außenraum angeordnet. Die Faltenbalgabdeckung 3 ist entlang der Auszugsrichtung 16 verlagerbar an der Schieneneinrichtung 2 angeordnet.

Wie in der Fig. 1 dargestellt, befindet sich die Faltenbalgabdeckung 3 zunächst in der Ausrückstellung. In der Ausrückstellung ist ein Abstand a_{A} zwischen je zwei zueinander benachbarten Profilstangen 10 maximal, wodurch eine von der Faltenbalgabdeckung 3 überdeckte Fläche maximal ist.

Um die Zugänglichkeit der Werkzeugmaschine zu gewährleisten, ist die Faltenbalgabdeckung 3 entlang der Auszugsrichtung 16 verlagerbar. In der Fig. 2 ist die Faltenbalgabdeckung 3 in einer Einrückstellung dargestellt. Zum Verlagern der Faltenbalgabdeckung 3 aus der Ausrückstellung in die Einrückstellung werden die über die Kopfrollenanker 6 und die Fußschieneneingriffe 7 an der Schieneneinrichtung 2 gelagerten Profilstangen 10 entgegen der Auszugsrichtung 16 verlagert. Die Profilstangen 10 nähern sich einander, wobei zwei zueinander beabstandete Profilstangen 10 in der Einrückstellung einen Abstand a_{E} zueinander aufweisen. Der Faltvorhang 11 wird im Bereich von Faltkanten 23 um die Längsrichtung 12 gefaltet. Eine von der Faltenbalgabdeckung 3 überdeckte Fläche ist in der Ausrückstellung minimal.

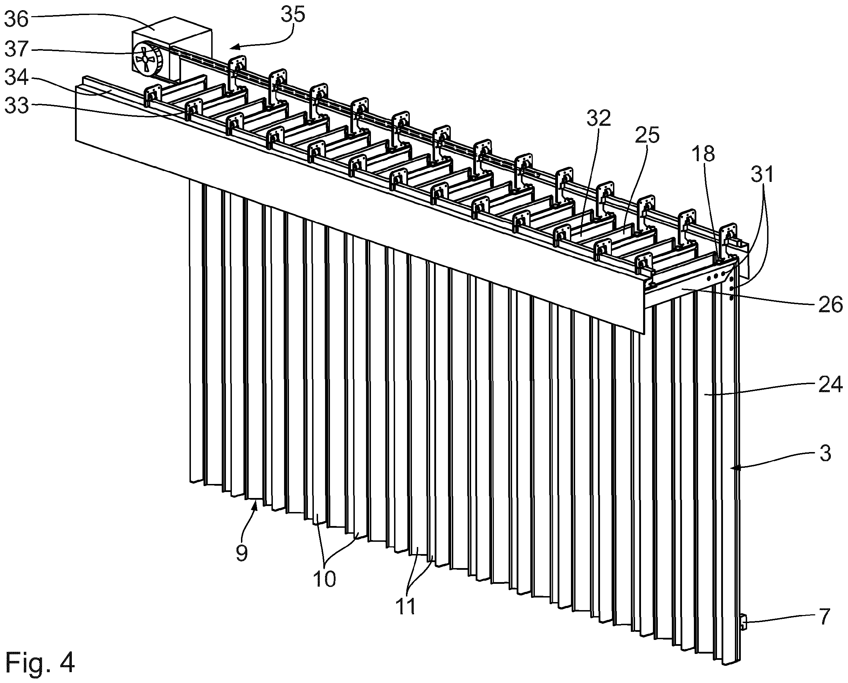

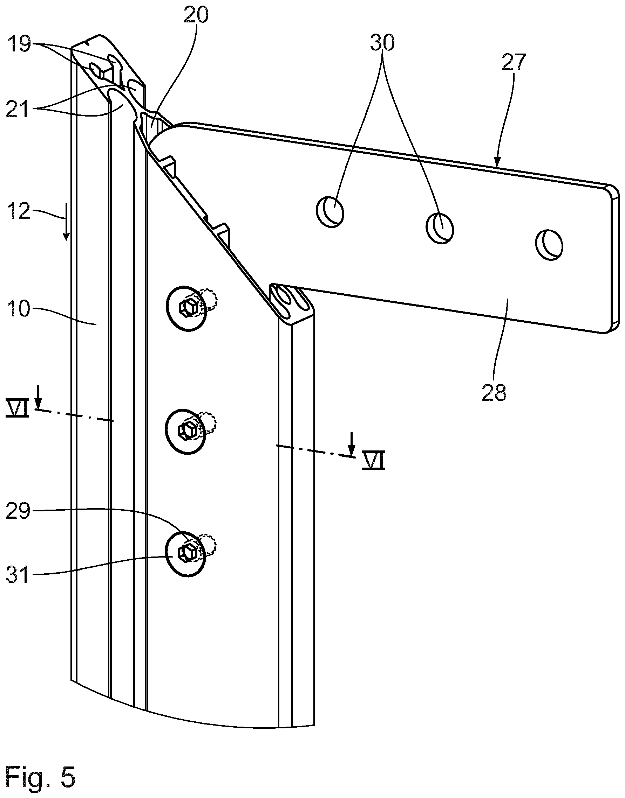

Anhand der Fig. 4 bis Fig. 6 ist ein weiteres nicht erfindungsgemäßes Ausführungsbeispiel des Abdecksystems 1 bzw. der Faltenbalgabdeckung 3 beschrieben. Im Unterschied zu dem vorangegangenen Ausführungsbeispiel umfasst die Faltenbalgabdeckung 3 einen Wandabschnitt 24 und einen Dachabschnitt 25. Der Wandabschnitt 24 der Faltenbalgabdeckung 3 gemäß dem zweiten Ausführungsbeispiel entspricht im Wesentlichen der bereits beschriebenen Faltenbalgabdeckung 3. Jedes der Faltenbalgglieder 9 umfasst darüber hinaus eine senkrecht zu der Längsrichtung 12 der jeweiligen Profilstange 10 orientierte und an dieser angebrachte Anschlussprofilstange 26. Die Anschlussprofilstange 26 weist dieselbe Querschnittsfläche auf wie die Profilstange 10. Die Anschlussprofilstange 26 ist an der Profilstange 10 jeweils mittels eines in der Fig. 5 im Detail dargestellten Winkelverbinders 27 angebracht. Der Winkelverbinder 27 weist zwei senkrecht zueinander orientierte Schenkel 28 auf. Ein erster der Schenkel 28 ist in den Hohlraum 20 der Profilstange 10 eingeführt. Ein zweiter der Schenkel 28 ist in den Hohlraum 20 der Anschlussprofilstange 26 eingeführt. Zum Befestigen des Winkelverbinders 27 entlang der Längsrichtung 12 weist die Profilstange 10 drei Querbohrungen 29 auf. Der Winkelverbinder 27 weist entsprechende Verbinderbohrungen 30 auf. Über Bolzen 31 ist der Winkelverbinder 27 entlang der Längsrichtung 12 formschlüssig mit der Profilstange 10 verbunden. In gleicher Weise ist der Winkelverbinder 27 über Bolzen 31 mit der Anschlussprofilstange 26 verbunden.

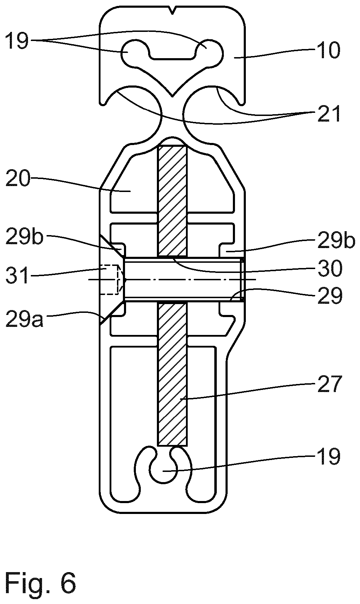

Wie in der Fig. 6 in Detail dargestellt, weisen die Querbohrungen 29 zum flächenbündigen Einbringen der als Senkkopfschrauben ausgebildeten Bolzen 31 Senkungen 29a auf. Im Bereich der Querbohrungen 29 weist eine Wandung der Profilstange 10 eine Aufdickung 29b auf. Die Stabilität der Profilstange 10 ist somit erhöht.

Die Verbindung zwischen der Profilstange 10 und der Anschlussprofilstange 26 ist als Gehrung ausgebildet. Die Übertragung von Kräften zwischen der Profilstange 10 und der Anschlussprofilstange 26 erfolgt im Wesentlichen über den Winkelverbinder 27. Die Schraubelemente 18 zum Verbinden des Kopfrollenankers 6 mit der Profilstange 10 erstrecken sich zwischen dem Ankerflansch 13 und den Längslöchern 19, wobei die endseitig an der Anschlussprofilstange 26 angeordneten Schraubelemente 18 die Anschlussprofilstange 26 durchdringen und somit ebenfalls zur Verbindung der Anschlussprofilstange 26 mit der Profilstange 10 beitragen.

Zwischen zwei zueinander benachbarten Anschlussprofilstangen 26 ist in gleicher Weise wie zwischen den Profilstangen 10 ein Anschlussfaltvorhang 32 angeordnet. Der Anschlussfaltvorhang 32 und der Faltvorhang 11 je eines Faltenbalgglieds 9 sind einstückig ausgebildet.

An einer dem Wandabschnitt abgewandten Seite der Anschlussprofilstange 26 umfasst die Faltenbalgabdeckung 3 je einen mit der jeweiligen Anschlussprofilstange 26 verbunden Anschlussrollenanker 33. Der Anschlussrollenanker 33 ist mittels Schraubelementen 18 kraftschlüssig mit der jeweiligen Anschlussprofilstange 26 verbunden.

Die Schieneneinrichtung 2 umfasst ein Anschlussschienenprofil 34, an dem die Anschlussrollenanker 33 in gleicher Weise wie die Kopfrollenanker 6 an dem Kopfschienenprofil 4 gelagert sind.

Das Abdecksystem 1 umfasst eine Antriebseinheit 35 mit einem Antriebsmotor 36, welcher über eine Antriebskette 37 mit der Faltenbalgabdeckung 3 in Wirkverbindung steht. Mittels der Antriebseinheit 35 ist die Faltenbalgabdeckung 3 automatisiert zwischen der Ausrückstellung und Einrückstellung verlagerbar.

Die Funktionsweise des Abdecksystems 1 gemäß dem zweiten Ausführungsbeispiel entspricht der Funktionsweise des Abdecksystems 1 gemäß dem ersten Ausführungsbeispiel. Durch die Ausbildung der Faltenbalgabdeckung 3 mit dem Wandabschnitt 24 und dem Dachabschnitt 25 ist die Werkzeugmaschine sowohl in horizontaler Richtung als auch in vertikaler Richtung nach oben gegenüber einem Außenraum abdeckbar. Durch Betätigen der Antriebseinheit 35 kann die Faltenbalgabdeckung 3 automatisiert zwischen der Ausrückstellung und der Einrückstellung verlagert werden.

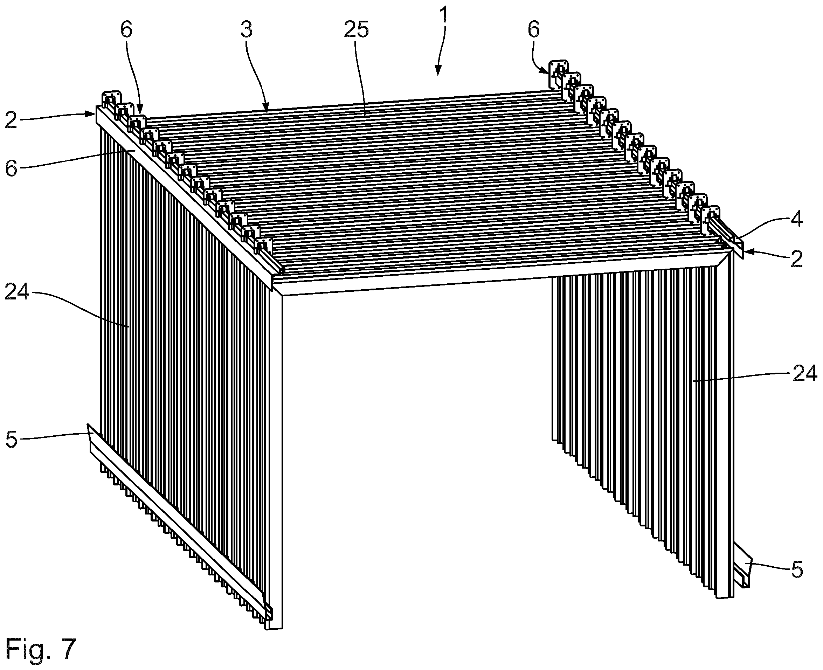

Anhand der Fig. 7 ist ein weiteres nicht erfindungsgemäßes Ausführungsbeispiel des Abdecksystems 1 bzw. der Faltenbalgabdeckung 3 beschrieben. Im Unterschied zu den vorangegangenen Ausführungsbeispielen umfasst die Faltenbalgabdeckung 3 einen Dachabschnitt 25 und zwei jeweils an gegenüberliegenden Kanten des Dachabschnitts 25 angeordnete Wandabschnitte 24. Durch die Ausbildung der Faltenbalgabdeckung 3 mit dem Dachabschnitt 25 und den beiden daran angeordneten Wandabschnitten 24 ist die Faltenbalgabdeckung 3 als Abdecktunnel ausgebildet.

Das Abdecksystem 1 umfasst je ein oberhalb des jeweiligen Wandabschnitts 24 angeordneten Kopfschienenprofil 4 und je ein in einem Fußbereich des jeweiligen Wandabschnitts 24 angeordnetes Fußschienenprofil 5. Entsprechend der Ausbildung der Faltenbalgabdeckung 3 gemäß dem zweiten Ausführungsbeispiel ist je ein Kopfrollenanker 6 und ein Fußschieneneingriff 7 mit einer Profilstange 10 des jeweiligen Wandabschnitts 24 verbunden. Die Kopfrollenanker 6 und die Fußschieneneingriffe 7 greifen entsprechend den vorstehend beschriebenen Ausführungsbeispielen in die Kopfschienenprofile 4 und die Fußschienenprofile 5 der Schieneneinrichtung 2 ein.

Die Funktionsweise des Abdecksystems 1 bzw. der Faltenbalgabdeckung 3 gemäß dem dritten Ausführungsbeispiel entspricht der Funktionsweise des Abdecksystems 1 bzw. der Faltenbalgabdeckung 3 gemäß den vorstehend beschriebenen Ausführungsbeispielen.

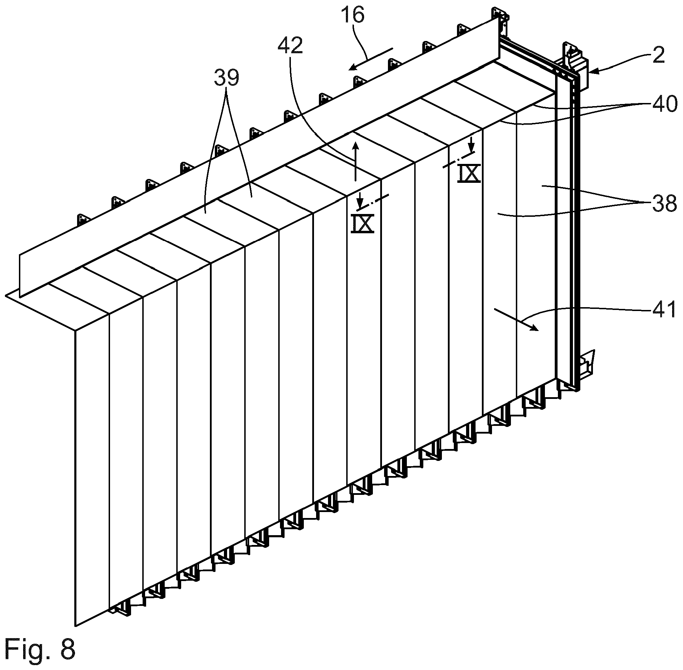

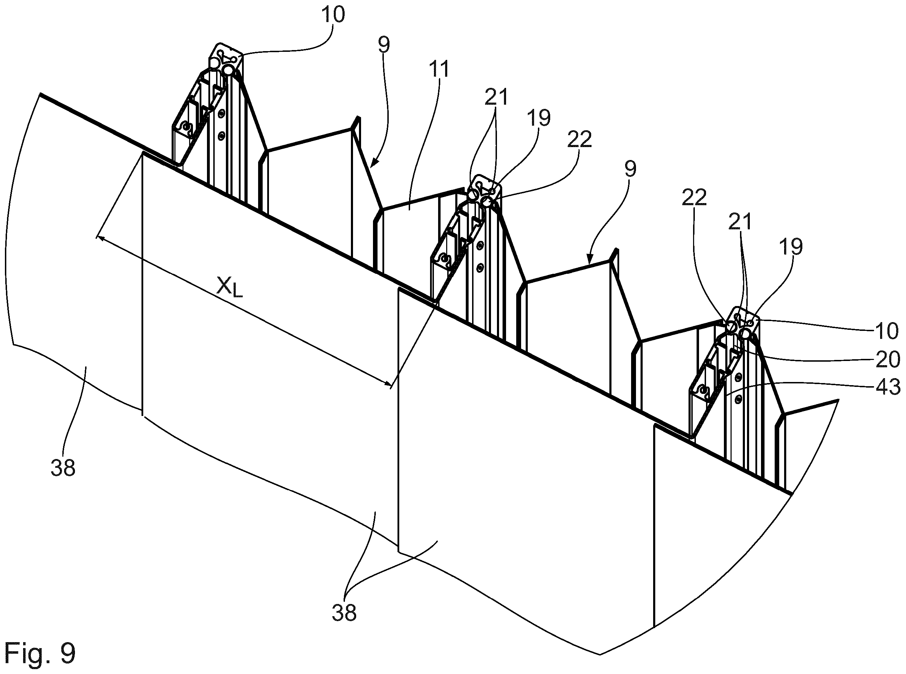

Anhand der Fig. 8 und Fig. 9 ist ein weiteres nicht erfindungsgemäßes Ausführungsbeispiel beschrieben. Im Unterschied zu dem zweiten Ausführungsbeispiel umfassen die Faltenbalgglieder 9 der Faltenbalgabdeckung 3 je ein mit der Profilstange 10 verbundenes und als Lamellenblech 38 ausgebildetes Lamellenelement. Das Lamellenblech 38 ist jeweils nur mit einer einzigen Profilstange 10 verbunden. In gleicher Weise ist mit jeder Anschlussprofilstange 26 ein Anschlusslamellenblech 39 verbunden. Die Lamellenbleche 38 und die Anschlusslamellenbleche 39 sind einstückig miteinander verbunden. Das Lamellenblech 38 und das Anschlusslamellenblech 39 sind durch Abkanten an einer Anschlusslinie 40 aus einer einzelnen Blechtafel hergestellt. Die Anschlusslinie 40 erstreckt sich parallel zu der Auszugsrichtung 16.

Die Lamellenbleche 38 überlappen einander in einer Wandabdeckrichtung 41, senkrecht zu dem Wandabschnitt 24. Die Anschlusslamellenbleche 39 überlappen einander in einer Dachabdeckrichtung 42, senkrecht zu dem Dachanschnitt 25.

In der Fig. 9 sind die Faltenbalgglieder 9 mit der Profilstange 10, dem Faltvorhang 11 und dem Lamellenblech 38 des Wandabschnitts 24 im Detail dargestellt. Zur Verbindung mit zwei zueinander benachbarten Profilstangen 10 weist der jeweilige Faltvorhang 11 die Vorhangkeder 22 auf. Die Vorhangkeder 22 sind formschlüssig mit der Kedernut 21 der jeweiligen Profilstange 10 verbunden.

Zum überstandsreduzierten Anbringen des Lamellenblechs 38 an der Profilstange 10 weist die Profilstange 10 eine stufenförmig zurückspringende Anschlussfläche 43 auf. Das Lamellenblech 38 ist mit der Profilstange 10 im Bereich der Anschlussfläche 43 stoffschlüssig verbunden, insbesondere verschweißt. Die Anschlussprofilstange 26 weist eine identische Querschnittsfläche wie die Profilstange 10 auf. Das Anschlusslamellenblech 39 ist in gleicher Weise mit der Anschlussprofilstange 26 verbunden wie das Lamellenblech 38 mit der Profilstange 10. Zum Befestigen der Winkelverbinder 27 mittels der Bolzen 31 weist die Profilstange 10 die Querbohrungen 29 mit den Senkungen 29a auf.

Die Funktionsweise des Abdecksystems 1 bzw. der Faltenbalgabdeckung 3 gemäß diesem Ausführungsbeispiel entspricht der Funktionsweise des Abdecksystems 1 bzw. der Faltenbalgabdeckung 3 gemäß den vorstehend beschriebenen Ausführungsbeispielen. Die Anordnung der Lamellenbleche 38 und der Anschlusslamellenbleche 39 auf Seiten der Werkzeugmaschine gewährleistet, dass der Außenraum sicher und zuverlässig gegenüber dem maschinenseitigen Raum abgeschirmt ist.

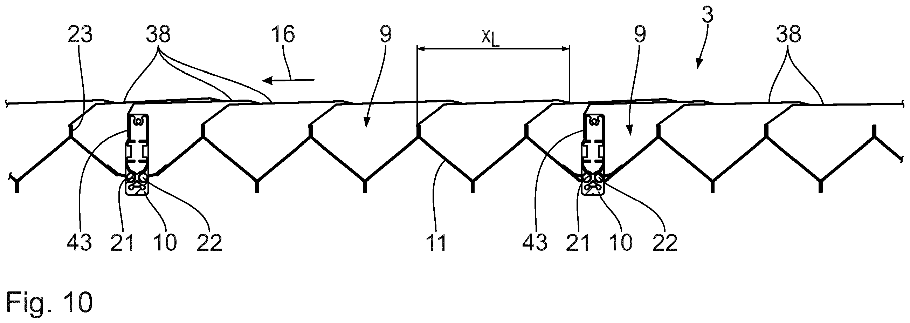

Anhand der Fig. 10 ist ein erfindungsgemäßes Ausführungsbeispiel einer Faltenbalgabdeckung 3 beschrieben. Im Unterschied zu dem vorangegangenen Ausführungsbeispiel weist jedes der Faltenbalgglieder 9 fünf Lamellenbleche 38 auf. An jeder der Profilstangen 10, insbesondere an jeder der Anschlussflächen 43, ist ein Lamellenelement 38 angeordnet. Zudem sind an jedem Faltvorhang 11, insbesondere im Bereich der jeweiligen Faltkanten 23, insgesamt vier Lamellenbleche 38 angeordnet. Die Lamellenbleche 38 überlappen einander entlang der Auszugsrichtung 16.

Die Funktionsweise der Faltenbalgabdeckung 3 gemäß diesem Ausführungsbeispiel entspricht der Funktionsweise der Faltenbalgabdeckung 3 gemäß den vorstehend beschriebenen Ausführungsbeispielen. Durch die Anordnung der mehreren Lamellenbleche 38 an dem jeweiligen Faltenbalgglied 9 ist eine Lamellenbreite x_{L} des jeweiligen Lamellenblechs 38 besonders schmal dimensionierbar. Die Faltenbalgabdeckung 3 ist in der Einrückstellung entlang der Auszugsrichtung 16 besonders kompakt anordenbar. Die an den Profilstangen 10 befestigten Lamellenbleche 38 stützen und stabilisieren die dazwischenliegenden und an dem Faltvorhang 11 angeordneten Lamellenbleche 38.

Das Abdecksystem 1 bzw. die Faltenbalgabdeckung 3 gemäß den vorstehend beschriebenen Ausführungsbeispielen gewährleistet eine mechanisch besonders robuste und verschleißfeste Abdeckung einer Werkzeugmaschine, eine hohe Anwendungsflexibilität durch einen modularen Aufbau und eine besonders wirtschaftliche Herstellung, insbesondere aufgrund der Ausbildung der Profilstangen 10 mit dem mindestens einen, sich entlang der Längsrichtung 12 erstreckenden Eingriffsprofil 19, 20, 21.

## Patentansprüche

1. Faltenbalgabdeckung für eine Werkzeugmaschine
- mit mehreren miteinander verbundenen Faltenbalgglieder (9) mit jeweils
-- einer eine Längsrichtung (12) aufweisenden Profilstange (10), die mindestens ein, sich entlang der Längsrichtung (12) erstreckendes Eingriffsprofil (19, 20, 21) umfasst, und
-- einem an der Profilstange (10) angebrachten Faltvorhang (11),
- wobei zum Verbinden von je zwei der Faltenbalgglieder (9) der Faltvorhang (11) eines dieser Faltenbalgglieder (9) an der Profilstange (10) des dazu benachbarten Faltenbalgglieds (9) angebracht ist,
**dadurch gekennzeichnet, dass**
die mehreren Faltenbalgglieder (9) Lamellenelemente (38) aufweisen, wobei an jeder der Profilstangen (10) ein Lamellenelement (38) angeordnet ist und an jedem der Faltvorhänge (11) ein Lamellenelement (38) an einer Aufdickung angeordnet ist.

2. Faltenbalgabdeckung nach Anspruch 1, **dadurch gekennzeichnet, dass** das mindestens eine Eingriffsprofil (19, 20, 21) als Kedernut (21) zum Verbinden der Profilstange (10) mit dem Faltvorhang (11) ausgebildet ist.

3. Faltenbalgabdeckung nach Anspruch 1 oder 2, **dadurch gekennzeichnet, dass** die Profilstange (10) zum Ausbilden des mindestens einen Eingriffsprofils (19, 20, 21) als Hohlprofil ausgebildet ist.

4. Faltenbalgabdeckung nach einem der vorstehenden Ansprüche,
**dadurch gekennzeichnet, dass** die mehreren Faltenbalgglieder (9) jeweils ein an einem Ende der Profilstange (10) angebrachtes Anschlussmittel (6, 7) zum verlagerbaren Befestigen der Faltenbalgabdeckung (3) aufweisen.

5. Faltenbalgabdeckung nach einem der vorstehenden Ansprüche,
**dadurch gekennzeichnet, dass** das mindestens eine Eingriffsprofil (19, 20, 21) als Längsloch (19) ausgebildet ist.

6. Faltenbalgabdeckung nach einem der vorstehenden Ansprüche,
**dadurch gekennzeichnet, dass** die Profilstange (10) mindestens eine, sich senkrecht zu der Längsrichtung (12) erstreckende Querbohrung (29) aufweist, wobei die Profilstange (10) in einem Bereich um die mindestens eine Querbohrung (29) eine Aufdickung (29b) aufweist.

7. Faltenbalgabdeckung nach einem der vorstehenden Ansprüche,
**dadurch gekennzeichnet, dass** die Profilstange (10) mindestens eine Querbohrung (29) mit einer Senkung (29a) zum flächenbündigen Einbringen von Verbindungselementen (31) aufweist.

8. Faltenbalgabdeckung nach einem der vorstehenden Ansprüche,
**dadurch gekennzeichnet, dass** die mehreren Faltenbalgglieder (9) jeweils mindestens eine an der Profilstange (10) geneigt angebrachte Anschlussprofilstange (26) aufweisen.

9. Faltenbalgabdeckung nach Anspruch 8, **dadurch gekennzeichnet, dass** die Profilstange (10) und die Anschlussprofilstange (26) identische Querschnittsflächen aufweisen.

10. Faltenbalgabdeckung nach Anspruch 8 oder 9, **dadurch gekennzeichnet, dass** die Profilstange (10) und die Anschlussprofilstange (26) über eine Gehrung miteinander verbunden sind.

11. Faltenbalgabdeckung nacheinem der vorstehenden Ansprüche,
**dadurch gekennzeichnet, dass** die Profilstange (10) eine stufenförmig zurückspringende Anschlussfläche (43) zum überstandsreduzierten Anbringen des Lamellenelements (38) aufweist.

12. Abdecksystem mit
- einer Faltenbalgabdeckung (3) nach einem der Ansprüche 1 bis 11 und
- einer Schieneneinrichtung (2), an dem die Faltenbalgabdeckung (3) verschiebbar angebracht ist.

## Claims

1. Folding bellows cover for a machine tool
- with a plurality of interconnected folding bellow members (9) each having a
-- a profile bar (10) having a longitudinal direction (12) and comprising at least one engagement profile (19, 20, 21) extending along the longitudinal direction (12), and
-- a folding curtain (11) attached to the profile bar (10),
- wherein for connecting two of the folding bellow members (9) each, the folding curtain (11) of one of these folding bellow members (9) is attached to the profile bar (10) of the folding bellow member (9) adjacent thereto,
**characterized in that**
the plurality of folding bellow members (9) have lamella elements (38), a lamella element (38) being arranged on each of the profile bars (10) and a lamella element (38) being arranged on a thickening on each of the folding curtains (11).

2. Folding bellows cover according to claim 1, **characterized in that** the at least one engagement profile (19, 20, 21) is formed as a Keder groove (21) for connecting the profile bar (10) to the folding curtain (11).

3. Folding bellows cover according to claim 1 or 2, **characterized in that** the profile bar (10) for forming the at least one engagement profile (19, 20, 21) is designed as a hollow profile.

4. Folding bellows cover according to any one of the preceding claims, **characterized in that** the plurality of bellow members (9) each have a connecting means (6, 7) attached to one end of the profile bar (10) for fixing the bellows cover (3) in a displaceable manner.

5. Folding bellows cover according to one of the preceding claims, **characterized in that** the at least one engagement profile (19, 20, 21) is formed as a longitudinal hole (19).

6. Folding bellows cover according to any one of the preceding claims, **characterized in that** the profile bar (10) has at least one transverse bore (29) extending perpendicularly to the longitudinal direction (12), the profile bar (10) having a thickening (29b) in a region around the at least one transverse bore (29).

7. Folding bellows cover according to any one of the preceding claims, **characterized in that** the profile bar (10) has at least one transverse bore (29) with a countersink (29a) for the flush insertion of connecting elements (31).

8. Folding bellows cover according to any one of the preceding claims, **characterized in that** the plurality of bellow members (9) each comprise at least one connecting profile bar (26) attached to the profile bar (10) in an inclined manner.

9. Folding bellows cover according to claim 8, **characterized in that** the profile bar (10) and the connection profile bar (26) have identical cross-sectional areas.

10. Folding bellows cover according to claim 8 or 9, **characterized in that** the profile bar (10) and the connection profile bar (26) are connected to each other by a mitre.

11. Folding bellows cover according to any one of the preceding claims, **characterized in that** the profile bar (10) has a step-shaped recessed connecting surface (43) for the projection-reduced attachment of the lamella element (38).

12. Cover system with
- a folding bellows cover (3) according to any one of claims 1 to 11, and
- a rail device (2) to which the folding bellows cover (3) is attached in a slidable manner.

## Revendications

1. Couvercle de soufflets pour une machine-outil
- avec une pluralité d'éléments de soufflets interconnectés (9) ayant chacun
-- une barre profilée (10) ayant une direction longitudinale (12) et comprenant au moins un profil d'engagement (19, 20, 21) s'étendant le long de la direction longitudinale (12), et
-- un rideau pliant (11) attaché à la barre profilée (10),
- dans lequel, pour relier respectivement deux des éléments de soufflets (9), le rideau pliant (11) de l'un de ces éléments de soufflets (9) est attaché à la barre profilée (10) de l'élément de soufflets (9) adjacent,
**caractérisé en ce que**
la pluralité d'éléments de soufflets (9) présente des éléments de lamelle (38), un élément de lamelle (38) étant disposé sur chacune des barres profilées (10) et un élément de lamelle (38) étant disposé sur un épaississement sur chacun des rideaux pliant (11).

2. Couvercle de soufflets selon la revendication 1, **caractérisé en ce que** l'au moins un profil d'engagement (19, 20, 21) est formé comme une rainure de Keder (21) pour relier la barre profilé (10) au rideau pliant (11).

3. Couvercle de soufflets selon la revendication 1 ou 2, **caractérisé en ce que** la barre profilée (10) pour former l'au moins un profil d'engagement (19, 20, 21) est conçue comme un profilé creux.

4. Couvercle de soufflets selon l'une quelconque des revendications précédentes, **caractérisé en ce que** la pluralité d'éléments de soufflets (9) comprend chacun un moyen de connexion (6, 7) attaché à une extrémité de la barre profilée (10) pour fixer de manière déplaçable le couvercle de soufflets (3).

5. Couvercle de soufflets selon l'une quelconque des revendications précédentes, **caractérisé en ce que** l'au moins un profil d'engagement (19, 20, 21) est formé comme un trou longitudinal (19).

6. Couvercle de soufflets selon l'une quelconque des revendications précédentes, **caractérisé en ce que** la barre profilée (10) présente au moins un perçage transversal (29) s'étendant perpendiculairement à la direction longitudinale (12), la barre profilée (10) présentant un épaississement (29b) dans une zone autour de l'au moins un perçage transversal (29).

7. Couvercle de soufflets selon l'une quelconque des revendications précédentes, **caractérisé en ce que** la barre profilée (10) présente au moins un perçage transversal (29) avec un lamage (29a) pour l'insertion à fleur d'éléments de liaison (31).

8. Couvercle de soufflets selon l'une quelconque des revendications précédentes, **caractérisé en ce que** la pluralité d'éléments de soufflets (9) comprend chacun au moins une barre profilée de jonction (26) attachée à la barre profilée (10) de manière inclinée.

9. Couvercle de soufflets selon la revendication 8, **caractérisé en ce que** la barre profilée (10) et la barre profilée de jonction (26) ont des surfaces de section transversale identiques.

10. Couvercle de soufflets selon la revendication 8 ou 9, **caractérisé en ce que** la barre profilée (10) et la barre profilée de jonction (26) sont reliées l'une à l'autre par un onglet.

11. Couvercle de soufflets selon l'une quelconque des revendications précédentes, **caractérisé en ce que** la barre profilée (10) présente une surface de raccordement en retrait (43) en forme de gradin pour attacher l'élément de lamelle (38) en saillie réduite.

12. Système de couverture avec
- un couvercle de soufflets (3) selon l'une quelconque des revendications 1 à 11, et
- un dispositif de rails (2) sur lequel le couvercle du soufflets (3) est attaché de manière coulissante.
